# EUROPÄISCHE PATENTSCHRIFT

(11) **EP 2 569 552 B1**
(45) Veröffentlichungstag und Bekanntmachung des Hinweises auf die Patenterteilung: **08.01.2014**
(21) Anmeldenummer: 11713697.8
(22) Anmeldetag: 07.04.2011
(51) Int. Cl.: F16D 55/2265, F16J 3/04

(54) **SCHEIBENBREMSE, INSBESONDERE FÜR NUTZFAHRZEUGE**
DISK BRAKE, IN PARTICULAR FOR UTILITY VEHICLES
FREIN À DISQUE, EN PARTICULIER POUR VÉHICULES UTILITAIRES

(30) Priorität: 14.05.2010 DE 102010020588
(43) Veröffentlichungstag der Anmeldung: 20.03.2013
(73) Patentinhaber: Wabco Radbremsen GmbH, 68229 Mannheim (DE)
(72) Erfinder: REISER, Manuel, 76307 Karlsbad (DE)
(74) Vertreter: Leinweber & Zimmermann
(86) Internationale Anmeldenummer: PCT/EP2011/001741
(87) Internationale Veröffentlichungsnummer: WO 2011/141104

(56) Entgegenhaltungen:
- EP-A1- 0 381 306
- DE-A1-102008 018 468
- DE-U1-202006 006 142

## Beschreibung

Die Erfindung betrifft eine Scheibenbremse, insbesondere für Nutzfahrzeuge, mit einem Träger, einem Sattel, einer Halteeinrichtung zum verschieblichen Halten des Sattels an dem Träger, einer Dichtung, die in einer Ausnehmung an der Halteeinrichtung befestigt ist, und einer Vorspanneinrichtung zum Vorspannen der Dichtung in der Ausnehmung.

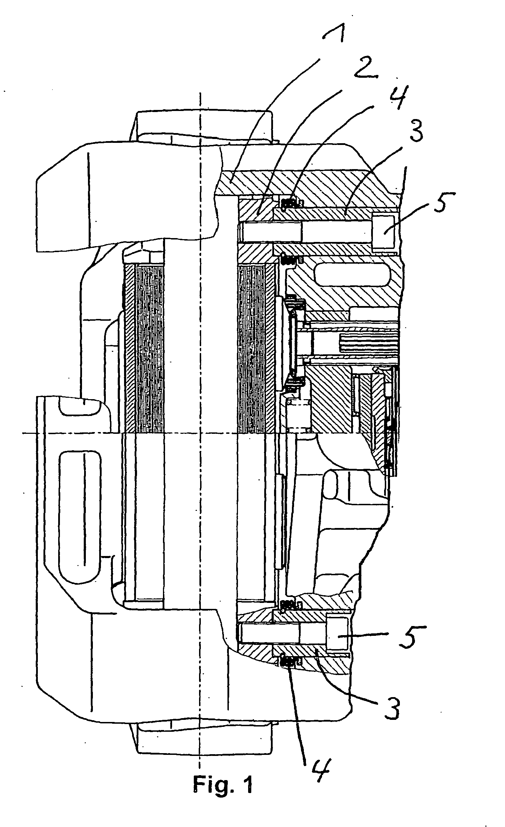

Figur 1 zeigt eine teilweise geschnittene Ansicht einer solchen Scheibenbremse. Man erkennt einen eine Bremsscheibe umfassenden Bremssattel 1, der an einem ortsfesten Träger 2 axial verschieblich gehalten ist, und zwar mittels zweier Halteeinrichtungen, wobei die Hatteeinrichtungen jeweils einen mittelbar oder unmittelbar an dem Träger 2 befestigten und sich von der Bremsscheibe weg erstreckenden Führungsbolzen 3 aufweisen, der den Bremssattel 1 mittelbar oder unmittelbar in einer Öffnung nach Art einer Gleitlagerung kontaktiert. In dem Bereich zwischen dem Bremssattel 1 und dem Träger 2 ist eine umhüllende Dichtung 4 in Form eines Faltenbalgs vorgesehen.

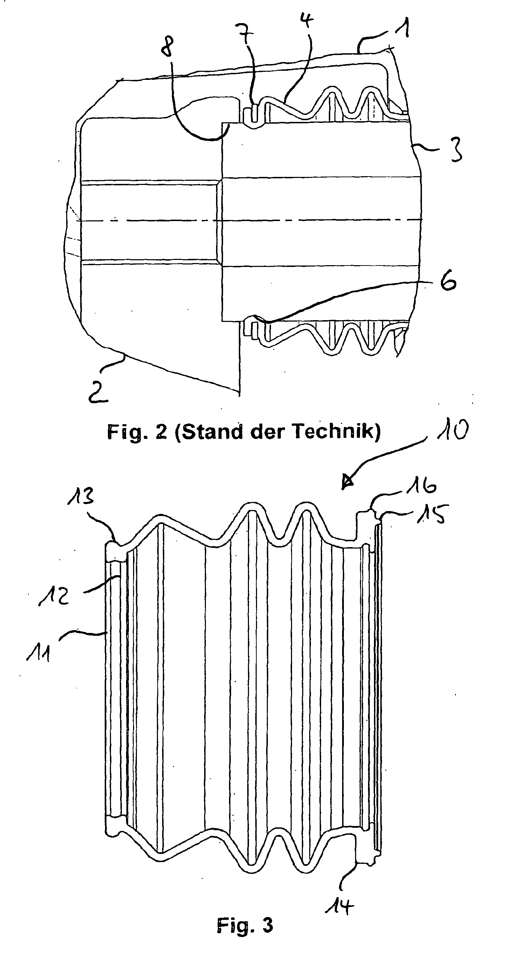

Figur 2 zeigt eine herkömmliche Lösung zum Anbringen der Dichtung 4. Danach ist sie einerseits am Führungsbolzen 3 und andererseits am Bremssattel, vorzugsweise in dessen Führungsöffnung, gehalten. Die Haltebereiche sind jeweils ringförmig umschließend. insbesondere die freie Halterung am Außenumfang des Führungsbolzens muß dicht sein, um die Gleitfunktion des Bremssattels auf dem Führungsbolzen sicherzustellen. Dazu ist eine Ringschnur vorgesehen, die elastisch ist und die Dichtung ausschließlich in Radialrichtung vorspannt. Ein nach einwärts weisender Dichtungswulst liegt in einer als Ringnut ausgeführten Ausnehmung des Führungsbolzens. Damit ist die Positionierung realisiert. Der Führungsbolzen 3 ist kraft- und formschlüssig in einem Bundbereich des Trägers 2 gelagert und mittels einer Zylinderschraube 5 befestigt, vgl. Figur 1.

Damit für die Dichtungshalterung die erforderliche Vorspannung in Radialrichtung und die Positionierung gesichert sind, ist nach der herkömmlichen, Lösung gemäß Figur 2 ein loser Ring oberhalb des Lagerbereichs in einer Ausnehmung der als Dichtung dienenden Haltemanschette verbracht. Der Ring ist ein separates Zusatzteil.

Eine weitere herkömmliche Lösung mit einem separaten Zusatzteil in Form eines aufgesetzten Halterings zeigt die DE-OS 10 2008 018 468. Der Haltering wirkt nach radial einwärts.

Die obigen Lösungen haben den Nachteil, daß zur Festlegung des ringförmig umlaufenden Dichtbereichs ein zusätzliches Bauteil benötigt wird. Neben den Kosten für das Zusatzteil und dem erhöhten Montageaufwand und mit der Gefahr, daß beim Aufbringen des separaten Zusatzteiles der Dichtungsbereich beschädigt werden kann, kann es auch zu einem Ablösen der Dichtung kommen, z.B. wenn sich das Zusatzteil im Feldeinsatz vom Elastomersitz trennt und somit die erforderliche Klemmvorspannung in Radialrichtung verlorengeht. Als Folge treten dann Undichtheiten auf, die die Gleitfunktion des Bremssattels gegenüber den Führungsbolzen beeinträchtigen.

Ein weiterer Nachteil ist darin zu sehen, daß der Kontaktbereich zwischen dem Führungsbolzen und dem Bundbereich des Trägers für die Kraft- und Formschlüssigkeit ungeschützt ist und zu Korrosionsanfälligkeit neigt.

Der Erfindung liegt die Aufgabe zugrunde, die Scheibenbremse der eingangs genannten Art derart weiterzubilden, daß die Abdichtung sowohl in wirtschaftlicher als auch in funktioneller Hinsicht verbessert ist. Ferner soll auch die Dichtung selbst in dieser Hinsicht verbessert werden.

Erfindungsgemäß wird die gestellte Aufgabe bei einer Scheibenbremse der eingangs genannten Art dadurch gelöst, daß die Vorspanneinrichtung auf das Anbringen der Halteeinrichtung anspricht.

Mit anderen Worten ist erfindungsgemäß eine "Automatik" vorgesehen, indem das Anbringen der Halteeinrichtung genügt, um die Dichtung in der Ausnehmung vorzuspannen. Es entfällt mithin ein separater Montageschritt zur Erzeugung der Vorspannung, was wirtschaftliche und funktionelle Vorteile hat.

Erfindungsgemäß bevorzugt ist die Halteeinrichtung an dem Träger angebracht, wobei die Vorspanneinrichtung an dem Träger ausgebildet ist. Ausdrücklich eingeschlossen ist damit eine Ausführungsform, bei der die Vorspanneinrichtung einstückig mit dem Träger ausgebildet ist.

Die Halteeinrichtung kann erfindungsgemäß prinzipiell beliebig ausgestaltet sein. Bevorzugt handelt es sich um einen Führungsbolzen. Weiterhin bevorzugt ist der als Halteeinrichtung wirkende Führungsbolzen mittels einer Zylinderschraube am Träger gehalten, wobei dies bevorzugt in einer kraft- und formschlüssigen Verbindung über einen als Einpaß dienenden Bundbereich erfolgt. Dies hat den Vorteil, daß beim Festschrauben keine Verdrehung des Führungsbolzens mit nachteiliger Verwindung des Dichtungsbereiches erfolgt. Ein weiterer Vorteil ergibt sich durch die unmittelbare Ausbildung der Vorspanneinrichtung am Träger mit einer Kontaktierung der Dichtung, wodurch auch der Lagerbereich des Führungsbolzens gegen Umwelteinflüsse geschützt ist.

Für die Vorspanneinrichtung gilt wiederum, daß sie prinzipiell beliebig ausgestaltet sein kann. Erfindungsgemäß bevorzugt ist aber vorgesehen, daß sie die Dichtung sowohl in Tiefenrichtung der Ausnehmung als auch in Richtung quer zu der Tiefenrichtung vorspannt. Dadurch wird die wirksame Dichtfläche besonders groß.

Die Ausnehmung hat erfindungsgemäß weiter bevorzugt eine rechteckige oder eine U-förmige Kontur. In diesem Falle bewirkt die Vorspannung in Tiefenrichtung ein Anpressen der Dichtung an den Boden des Rechtecks oder des "U", wohingegen die Vorspannung in Richtung quer zur Tiefenrichtung ein Anpressen der Dichtung an die Seitenbegrenzung des Rechtecks bzw. des "U" bewirkt.

Erfindungsgemäß weiter bevorzugt umläuft die Ausnehmung die Halteeinrichtung ringförmig. Auf diese Weise kann eine besonders verläßliche Abdichtung desjenigen Bereichs erreicht werden, in dem das gleitende Verschieben des Sattels bezüglich des Trägers erfolgt.

Nach einer besonders bevorzugten Ausführungsform der Erfindung ist vorgesehen, daß die Vorspanneinrichtung eine Steuerfläche aufweist, die gegen die Dichtung drückt. Diese Ausgestaltung ist besonders einfach zu realisieren.

Die Steuerfläche ist dabei weiter bevorzugt ringförmig und hat eine konische oder eine trompetenartige Kontur. Mit dieser Ausgestaltung kann insbesondere eine verläßliche Erzeugung der Vorspannkräfte sowohl in Tiefenrichtung der Ausnehmung als auch in Richtung quer zur Tiefenrichtung erreicht werden.

Zur weiteren Steigerung des Dichteffektes kann es erfindungsgemäß vorgesehen sein, daß die Dichtung mit mindestens einer Dichtlippe und/oder einem Wulst am Boden der Ausnehmung anliegt.

Weiter bevorzugt weist die Dichtung auf ihrer dem Boden der Ausnehmung abgewandten Seite einen Wulst auf. Ein solcher Wulst hat sich im Hinblick auf den angestrebten Dichteffekt als besonders vorteilhaft erwiesen.

Die Dichtung ist erfindungsgemäß weiter bevorzugt schlauchförmig. Insbesondere ist sie als Faltenbalg ausgestaltet, um auch die notwendige Längenveränderlichkeit angesichts der Verschieblichkeit des Sattels sicherzustellen. Der Faltenbalg ist bevorzugt aus einem Elastomerwerkstoff.

Zur Befestigung an dem Sattel weist die Dichtung erfindungsgemäß weiter bevorzugt einen Wulst auf, der in eine Ausnehmung an dem Sattel hineinragt. Diese Ausgestaltung ist wiederum besonders günstig, weil sie ohne zusätzliche Bauteile auskommt.

Der in die Ausnehmung an dem Sattel hineinragende Wulst liegt erfindungsgemäß weiter bevorzugt mit mindestens einer Dichtlippe am Boden der Ausnehmung und/oder mit mindestens einer Dichtlippe an einer Seitenwand der Ausnehmung an. Diese Ausgestaltung dient wiederum der Sicherstellung des angestrebten Dichteffekts.

Im folgenden ist die Erfindung anhand eines bevorzugten Ausführungsbeispiels unter Bezugnahme auf die beiliegende Zeichnung mit weiteren Einzelheiten näher erläutert.

Dabei zeigen
- Fig. 1: eine teilweise geschnittene Ansicht einer Scheibenbremse nach dem Stand der Technik,
- Fig. 2: eine geschnittene Detailansicht der Bremse nach Fig. 1 in vergrößertem Maßstab,
- Fig. 3: eine Dichtung nach einem Ausführungs-beispiel der Erfindung,
- Fig. 4: die gleiche Ansicht wie Fig. 2, jedoch von einer Scheibenbremse nach einem Ausführungsbeispiel der Erfindung und
- Fig. 5: eine Detailansicht eines Ausschnitts aus Fig. 4 in vergrößertem Maßstab.

Wie bereits oben erläutert, zeigt Fig. 1 eine Scheibenbremse mit einem Bremssattel. 1, einem Träger 2, zwei Führungsbolzen 3, 3, zwei Dichtungen 4, 4 und zwei Zylinderschrauben 5, 5. Innerhalb des Bremssattels ist eine nicht weiter erläuterte Zuspanneinrichtung vorhanden, die in bei Nutzfahrzeugscheibenbremsen bekannter Weise durch eine exzentrisch wirkende Drehhebelzuspannung realisiert wird.

Fig. 2 zeigt die Befestigung der Dichtung 4 im Detail. Danach ist die Dichtung 4 in eine Ringnut 6 eingelegt, die den Führungsbolzen 3 ringförmig umläuft. Innerhalb der Ringnut 6 ist sie in Radialrichtung elastisch vorgespannt. Zur Sicherung dient ein Ring 7. Der Führungsbolzen 3 steckt für den Kraft- und Formschluß in einer bundförmigen Ausnehmung 8 des Trägers 2 und ist mittels Zylinderschraube 5 befestigbar. In Fig. 2 ist die Zylinderschraube 5 zur Befestigung des Führungsbolzens 3 innerhalb der Ausnehmung 8 an dem Träger 2 der Übersichtlichkeit halber nicht eingezeichnet.

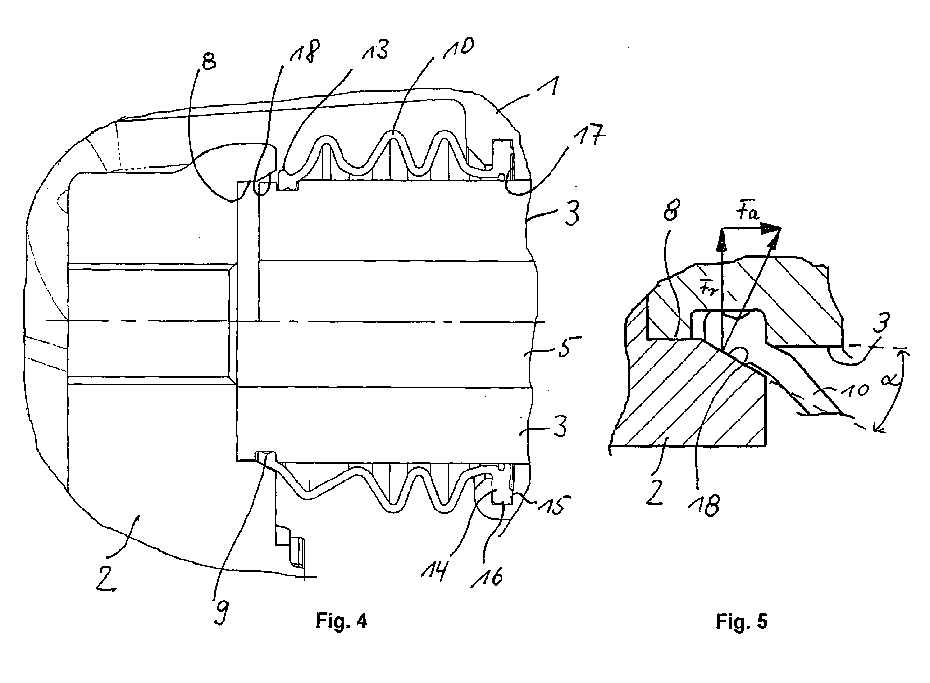

Fig. 4 zeigt ein Ausführungsbeispiel der Erfindung, und zwar oberhalb der Mittelachse den unverschraubten Zustand und unterhalb der Mittelachse den verschraubten Zustand. Gezeigt sind wiederum der Sattel 1, der Träger 2, der Führungsbolzen 3 und die Ausnehmung 8, in die der Führungsbolzen 3 in der Darstellung unterhalb der Mittelachse eingesteckt ist, wohingegen er in der Darstellung oberhalb der Mittelachse vor der Ausnehmung liegt. Generell erfolgt die Lagerung des Führungsbolzens 3 gegenüber dem Träger 2 mit Kraft- und Formschluß und dessen Befestigung mit einer Zylinderschraube 5 analog der Fig. 2. Es sei angemerkt, daß als Träger sowohl ein sogenannter Bremsenträger oder ein achsintegrierter Träger für den Bremssattel dienen kann.

Der Führungsbolzen 3 weist in dem in der Zeichnung dargestellten Ausführungsbeispiel eine im Querschnitt rechteckige Ringnut 9 auf, in die die Dichtung 10 eingelegt ist. Es sei hier angemerkt, daß die Ringnut auch erfindungsgemäß durch einen Absatz / eine Abstufung erzeugt werden kann, weil auch damit eine Lagesicherung erfolgt. Bei der Dichtung 10 handelt es sich um einen Faltenbalg. Der elastische Faltenbalg ist aus einem Elastomer. Der in die Ringnut 9 hineinragende Teil der Dichtung 10 weist zwei ringförmige Dichtlippen 11, 12 auf, die an dem Grund der Ringnut 9 anliegen. Die ringförmigen Dichtlippen können jedoch auch durch einen umlaufenden Wulst ersetzt werden, was die Kompaktheit verbessert. Auf der dem Grund der Ringnut 9 entgegengesetzten Seite ist an der Dichtung 10 ein ringförmig umlaufender Wulst 13 ausgebildet.

An dem anderen Ende hat die Dichtung 10 einen ringförmig umlaufenden Wulst 14 mit zwei ringförmig umlaufenden Dichtlippen 15 und 16. Der Wulst 14 hat einen in etwa rechteckigen Querschnitt und ist in eine rechteckige Ringnut 17 des Sattels 1 eingelegt. Die beiden Dichtlippen liegen am Boden bzw. an einer Seitenwand der Ringnut 17 an.

Die Ausnehmung 8 läuft unter Ausbildung einer Steuerfläche 18 konisch aus. Wird der Führungsbolzen 3 in die Ausnehmung 8 eingesteckt und mittels der Zylinderschraube 5 befestigt, so spannt die Steuerfläche 18 die Dichtung 10 innerhalb der Ringnut 12 "automatisch" vor, und zwar sowohl in Tiefenrichtung der Ringnut 9 als auch in Richtung quer dazu. Bei dem in der Zeichnung dargestellten Ausführungsbeispiel ergibt sich eine Vorspannung sowohl in Radialrichtung des Führungsbolzens 3, als auch in Axialrichtung, vgl. die Kräfte F, und Fₐ in Fig. 5. Um diese Vorspannung zu erzeugen, bedarf es keiner zusätzlichen Bauteile und keines zusätzlichen. Montageschrittes. Vielmehr ergibt sich die Vorspannung durch blosses Anbringen des Führungsbolzens 3 an dem Träger 2.

Durch Vorgabe des Anstellwinkels der Steuerfläche 18 lassen sich die axiale und die radiale Vorspannung zur Dichtungsverformung sehr leicht steuern. Bevorzugt ist ein Ansteuerwinkel a im Bereich von 25° bis 35°, besonders bevorzugt von 30°. Dabei muß die Steuerfläche 18 nicht konisch ausgebildet sein. Sie kann auch trompetenartig, also bogenförmig verlaufen.

Die rechteckige Form der Ringnut 9 des Führungsbolzens 3 ist besonders vorteilhaft. Dadurch wird nämlich der Dichtungsbereich der Dichtung besonders effektiv in die Ringnut 9 hinein verspannt. Ein besonderer Vorteil dieser Ausführungsform ergibt sich dadurch, daß die unmittelbare Kontaktierung des Wulstes 13 mit der Steuerfläche 18 auch die Ausnehmung 8 abdichtet. Somit ergibt sich ein Doppeldichteffekt, weil nicht nur die Bolzenführung selbst, sondern auch der Lagerbereich des Führungsbolzens 3 an dem Träger 2 geschützt ist. Dadurch werden Rost- und Schmutzunterwanderungen vermieden, was sich positiv auf die Bremsenfunktion und -wartung auswirkt.

## Patentansprüche

1. Scheibenbremse, insbesondere für Nutzfahrzeuge, mit
einem Träger (2),
einem Sattel (1),
einer Halteeinrichtung (3) zum verschieblichen Halten des Sattels an dem Träger,
einer Dichtung (10), die in einer Ausnehmung (9) an der Halteeinrichtung befestigt ist, und
einer Vorspanneinrichtung (18) zum Vorspannen der Dichtung in der Ausnehmung,
**dadurch gekennzeichnet, daß**
die Vorspanneinrichtung auf das Anbringen der Halteeinrichtung anspricht.

2. Scheibenbremse nach Anspruch 1, **dadurch gekennzeichnet, daß** die Halteeinrichtung (3) an dem Träger (2) angebracht ist und die Vorspanneinrichtung (18) an dem Träger ausgebildet ist.

3. Scheibenbremse nach Anspruch 1 oder 2, **dadurch gekennzeichnet, daß** die Halteeinrichtung (3) ein Führungsbolzen ist.

4. Scheibenbremse nach einem der vorangehenden Ansprüche, **dadurch gekennzeichnet, daß** die Vorspanneinrichtung (18) die Dichtung (10) sowohl in Tiefenrichtung der Ausnehmung (9) als auch in Richtung quer zur Tiefenrichtung vorspannt.

5. Scheibenbremse nach einem der vorangehenden Ansprüche, **dadurch gekennzeichnet, daß** die Ausnehmung (9) eine rechteckige oder eine U-förmige Kontur hat.

6. Scheibenbremse nach einem der vorangehenden Ansprüche, **dadurch gekennzeichnet, daß** die Ausnehmung (9) die Halteeinrichtung (3) ringförmig umläuft.

7. Scheibenbremse nach einem der vorangehenden Ansprüche, **dadurch gekennzeichnet, daß** die Vorspanneinrichtung (18) eine Steuerfläche aufweist, die gegen die Dichtung (10) drückt.

8. Scheibenbremse nach Anspruch 7, **dadurch gekennzeichnet, daß** die Steuerfläche ringförmig ist und eine konische oder trompetenartige Kontur hat.

9. Scheibenbremse nach einem der vorangehenden Ansprüche, **dadurch gekennzeichnet, daß** die Dichtung mit (10) mindestens einer Dichtlippe (11, 12) und/oder einem Wulst am Boden der Ausnehmung (9) anliegt.

10. Scheibenbremse nach einem der vorangehenden Ansprüche, **dadurch gekennzeichnet, daß** die Dichtung (10) auf ihrer dem Boden der Ausnehmung (9) abgewandten Seite einen Wulst (13) aufweist.

11. Scheibenbremse nach einem der vorangehenden Ansprüche, **dadurch gekennzeichnet, daß** die Dichtung (10) schlauchförmig ist.

12. Scheibenbremse nach einem der vorangehenden Ansprüche, **dadurch gekennzeichnet, daß** die Dichtung (10) an dem Sattel (1) befestigt ist.

13. Scheibenbremse nach einem der vorangehenden Ansprüche, **dadurch gekennzeichnet, daß** die Dichtung (10) zur Befestigung an dem Sattel (1) einen Wulst (14) aufweist, der in eine Ausnehmung (17) an dem Sattel hineinragt.

14. Scheibenbremse nach Anspruch 13, **dadurch gekennzeichnet, daß** der in die Ausnehmung (17) an dem Sattel (1) hineinragende Wulst (14) mit mindestens einer Dichtlippe (16) am Boden der Ausnehmung und/oder mit mindestens einer Dichtlippe (15) an einer Seitenwand der Ausnehmung anliegt.

## Claims

1. A disc brake, in particular for utility vehicles, comprising
a carrier (2),
a calliper (1),
a holding device (3) for displaceably holding the calliper on the carrier,
a seal (10) fastened in a recess (9) on the holding device, and
a pre-tensioning device (18) for pre-tensioning the seal in the recess,
**characterised in that**
the pre-tensioning device reacts to the attachment of the holding device.

2. The disc brake according to Claim 1, **characterised in that** the holding device (3) is attached to the carrier (2) and the pre-tensioning device (18) is constructed on the carrier.

3. The disc brake according to Claim 1 or 2, **characterised in that** the holding device (3) is a guide bolt.

4. The disc brake according to any of the preceding claims, **characterised in that** the pre-tensioning device (18) pre-tensions the seal (10) in the direction of the depth of the recess (9) as well as in the direction transverse to the direction of depth.

5. The disc brake according to any of the preceding claims, **characterised in that** the recess (9) has a rectangular or a U-shaped contour.

6. The disc brake according to any of the preceding claims, **characterised in that** the recess (9) runs around the holding device (3).

7. The disc brake according to any of the preceding claims, **characterised in that** the pre-tensioning device (18) has a control surface that presses against the seal (10).

8. The disc brake according to Claim 7, **characterised in that** the control surface is annular and has a conical or trumpet-like contour.

9. The disc brake according to any of the preceding claims, **characterised in that** the seal (10) rests with at least one sealing lip (11, 12) and/or a bead on the bottom of the recess (9).

10. The disc brake according to any of the preceding claims, **characterised in that** the seal (10) has a bead (13) on its side facing away from the bottom of the recess (9).

11. The disc brake according to any of the preceding claims, **characterised in that** the seal (10) is shaped like a hose.

12. The disc brake according to any of the preceding claims, **characterised in that** the seal (10) is fastened to the calliper (1).

13. The disc brake according to any of the preceding claims, **characterised in that** the seal (10) has a bead (14) for fastening to the calliper (1), which bead projects into a recess (17) on the calliper.

14. The disc brake according to Claim 13, **characterised in that** the bead (14) projecting into the recess (17) on the calliper (1) rests with at least one sealing lip (16) on the bottom of the recess and/or with at least one sealing lip (15) on a side wall of the recess.

## Revendications

1. Frein à disque notamment pour véhicules utilitaires, comportant :
un support (2),
un étrier (1),
un dispositif de maintien (3) destiné à maintenir l'étrier, de manière mobile, sur le support,
un joint d'étanchéité (10) fixé dans un évidement (9) sur le dispositif de maintien, et
un dispositif de précontrainte (18) destiné à précontraindre le joint d'étanchéité dans l'évidement,
**caractérisé en ce que**
le dispositif de précontrainte réagit à la mise en place du dispositif de maintien.

2. Frein à disque selon la revendication 1, **caractérisé en ce que** le dispositif de maintien (3) est mis en place sur le support (2) et le dispositif de précontrainte (18) est conçu sur le support.

3. Frein à disque selon la revendication 1 ou 2, **caractérisé en ce que** le dispositif de maintien (3) est un boulon de guidage.

4. Frein à disque selon l'une des revendications précédentes, **caractérisé en ce que** le dispositif de précontrainte (18) précontraint le joint d'étanchéité (10) aussi bien dans le sens de la profondeur de l'évidement (9) que dans le sens transversal au sens de la profondeur.

5. Frein à disque selon l'une des revendications précédentes, **caractérisé en ce que** l'évidement (9) présente un contour rectangulaire ou en forme d'U.

6. Frein à disque selon l'une des revendications précédentes, **caractérisé en ce que** l'évidement (9) entoure le dispositif de maintien (3) de manière annulaire.

7. Frein à disque selon l'une des revendications précédentes, **caractérisé en ce que** le dispositif de précontrainte (18) présente une surface de commande assurant une pression contre le joint d'étanchéité (10).

8. Frein à disque selon la revendication 7, **caractérisé en ce que** la surface de commande est annulaire et présente un contour conique ou en forme de trompette.

9. Frein à disque selon l'une des revendications précédentes, **caractérisé en ce que** le joint d'étanchéité (10) repose contre le fond de l'évidement (9) par le biais d'au moins une lèvre d'étanchéité (11, 12) et/ou d'un bourrelet.

10. Frein à disque selon l'une des revendications précédentes, **caractérisé en ce que** le joint d'étanchéité (10) présente un bourrelet (13) sur son côté détourné du fond de l'évidement (9).

11. Frein à disque selon l'une des revendications précédentes, **caractérisé en ce que** le joint d'étanchéité (10) est en forme de tuyau.

12. Frein à disque selon l'une des revendications précédentes, **caractérisé en ce que** le joint d'étanchéité (10) est fixé sur l'étrier (1).

13. Frein à disque selon l'une des revendications précédentes, **caractérisé en ce que** le joint d'étanchéité (10) présente un bourrelet (14), permettant sa fixation à l'étrier (1), qui fait saillie dans un évidement (17) de l'étrier.

14. Frein à disque selon la revendication 13, **caractérisé en ce que** le bourrelet (14) faisant saillie dans l'évidement (17) de l'étrier (1) repose, par le biais d'au moins une lèvre d'étanchéité (16), sur le fond de l'évidement et/ou, par le biais d'au moins une lèvre d'étanchéité (15), sur une paroi latérale de l'évidement.
